# EUROPÄISCHE PATENTANMELDUNG

(11) **EP 1 679 528 A2**
(43) Veröffentlichungstag der Anmeldung: **12.07.2006**
(21) Anmeldenummer: 05110396.8
(22) Anmeldetag: 07.11.2005
(51) Int. Cl.: G01S 17/87

(54) **Vorrichtung zur Entfernungsmessung**

(30) Priorität: 29.12.2004 DE 102004063183
(71) Anmelder: ROBERT BOSCH GMBH, 70442 Stuttgart (DE)
(72) Erfinder: Haase, Bjoern, 70182, Stuttgart (DE); Stierle, Joerg, 71111, Waldenbuch (DE); Wolf, Peter, 70771, Leinfelden-Echterdingen (DE); Pahud, Cédric, CH-1110, Morges (CH); Renz, Kai, 70771, Leinfelden-Echterdingen (DE); Schulte, Clemens, 70197, Stuttgart (DE)

(57) **Zusammenfassung**

Die Erfindung betrifft eine Vorrichtung zur Entfernungsmessung, insbesondere eine handgehaltene Vorrichtung, mit einem ersten Distanzmessmodul (12,12'), welches ein erstes Gehäuse (13,13') mit einer ersten Sendeeinheit für ein erstes Messsignal (120) und eine erste Empfangseinheit für das von einem ersten Zielobjekt (121) zurücklaufende erste Messsignal und eine erste Bedieneinheit (761) zur Aktivierung von Gerätefunktionen des ersten Distanzmessmodul (12,12') aufweist, sowie mit einem zweiten Distanzmessmodul (14,14'), welches ein zweites Gehäuse (15,15') mit einer zweiten Sendeeinheit für ein zweites Messsignal (140) und eine zweite Empfangseinheit für das von einem zweiten Zielobjekt (141) zurücklaufende zweite Messsignal und eine zweite Bedieneinheit (762) zur Aktivierung von Gerätefunktionen des zweiten Distanzmessmodul (14,14') aufweist, sowie mit zumindest einer Auswerteeinheit (110,111) zur Bestimmung der Entfernung zwischen dem ersten Zielobjekt (121) und dem zweiten Zielobjekt (141).

Erfindungsgemäß ist vorgesehen, dass das erste Distanzmessmodul (12,12') und das zweite Distanzmessmodul (14,14') über Verbindungsmittel (16,17,104,116,118) derart mechanisch und signaltechnisch miteinander koppelbar sind, dass bei Betätigung einer Funktionstaste (841,851) der ersten Bedieneinheit (761) auch die entsprechende Funktion (842,852) des zweiten Distanzmessmoduls (14,14') ausgelöst wird.

## Beschreibung

Die Erfindung geht aus von einer Vorrichtung zur Entfernungsmessung nach dem Oberbegriff des Anspruchs 1.

### Stand der Technik

Entfernungsmessgeräte und insbesondere handgehaltene Entfernungsmessgeräte, wie bspw. optoelektronische Distanzmesser oder Ultraschallmessgeräte sind als solche seit längerer Zeit bekannt und mittlerweile auch kommerziell erhältlich. Diese Geräte senden einen modulierten Messstrahl, bspw. einen Lichtstrahl in Form eines Laserstrahls aus, der auf ein gewünschtes Zielobjekt, dessen Abstand zum Gerät zu ermitteln ist, ausgerichtet wird. Das von dem angepeilten Zielobjekt reflektierte oder gestreute, rücklaufende Messsignal wird von einem Sensor des Gerätes zumindest teilweise wieder detektiert und zur Ermittlung des gesuchten Abstandes verwendet.

Typische Anwendungsgebiete derartiger Geräte liegen bspw. im Bereich des Handwerks bzw. des Innenausbaus, bei denen ein Anwender vor die Aufgabe gestellt ist, bestimmte Strecken, Flächen oder Volumina möglichst schnell und mit einer hohen Genauigkeit zu ermitteln. Um bspw. ein Aufmass zu erstellen, wird eine derartige Vorrichtung zur Entfernungsmessung mit einer ihr zugeordneten Referenzebene bspw. an eine erste Wand angehalten und durch Betätigung der Bedieneinheit der Vorrichtung kann somit ein gesuchter Abstand zu einer zweiten Wand gemessen oder bspw. auch die Grundfläche eines Raumes durch eine entsprechende zweite orthogonale Messung ermittelt werden.

Da das Messsignal bei derartigen Geräten typischerweise in eine Richtung ausgesendet wird, ist es erforderlich, die Referenzebene des Messgerätes, d.h. diejenige Ebene, auf die die mit dem Gerät gemessenen Abstände bezogen werden, möglichst exakt in den Nullpunkt der zu bestimmenden Strecke anzuordnen. Aus dem Stand der Technik sind eine Vielzahl von Ausbildungen von derartigen Referenzebenen oder Referenzpunkten an den Messgeräten bekannt.

Aus der DE 30 47 785 A1 ist eine Vorrichtung zum Messen von Längen bekannt, bei der in einem speziellen Ausführungsbeispiel vorgesehen sein kann, dass das Gehäuse der Vorrichtung beidseitig mit Sender- und Empfangseinheiten ausgerüstet ist. Die elektronische Schaltung innerhalb dieser Vorrichtung kann so gewählt sein, dass sie jeweils die zu beiden Seiten ausgesandten Messstrahlen zu einer Gesamtentfernung addiert. Mit einer solchen Technik ist es dann für die Messung einer Strecke gleichgültig, wo sich der Benutzer der Vorrichtung innerhalb des gesuchten Strecke befindet, da lediglich die Summebildung jeweils die gewünschte Entfernung angibt.

Aus der DE 102 14 742 A1 ist ein optisches Lateraldistanzhandmessgerät bekannt, welches eine Recheneinheit, eine Ein- bzw. Ausgabeeinheit sowie ein, einen sichtbaren Messlaserstrahl aussendendes, erstes Laserdistanzmessmodul und ein zweites Laserdistanzmessmodul, das einen zweiten sichtbaren Messlaserstrahl aussendet, aufweist. Über ein Verbindungselement sind das erste Laserdistanzmessmodul und das zweite Laserdistanzmessmodul des optischen Lateraldistanzhandmessgerätes der DE 102 14 742 A1 sowohl mechanisch als auch datentechnisch derart miteinander gekoppelt, dass die beiden Messlaserstrahlen einen definierten, der Recheneinheit zugänglichen Schwenkwinkel zueinander besitzen. Der Schwenkbereich des Schwenkgelenkes beinhaltet auch den Schwenkwinkel von 180°, welcher in vorteilhafter Weise als mechanischer Anschlag des Schwenkgelenkes ausgebildet ist, wodurch in der 180°-Position zwei Teildistanzen in entgegengesetzt gerichteten Orientierungen quasi simultan messbar sind, um so bspw. die Höhe eines Raumes auszumessen, ohne dabei den Boden zu berühren.

Aufgabe des vorliegenden Erfindung ist es, ausgehend von den Geräten des Standes der Technik, eine Vorrichtung zur Entfernungsmessung derart weiterzubilden, dass eine einfache Distanzmessung möglich wird, bei der es insbesondere nicht auf die exakte Anordnung des Messgerätes innerhalb der zu vermessenden Strecke ankommt.
Die der Erfindung zugrunde liegende Aufgabe wird mit einer Vorrichtung zur Entfernungsmessung mit den Merkmalen des Anspruchs 1 gelöst.

### Vorteile der Erfindung

Die erfindungsgemäße Vorrichtung zur Entfernungsmessung gemäß Anspruch 1 weist ein erstes Distanzmessmodul auf, welches ein erstes Gehäuse mit einer ersten Sendeeinheit für ein erstes Messsignal und eine erste Empfangseinheit für das von einem ersten Zielobjekt zurücklaufende erste Messsignal umfasst. Ferner besitzt das erste Distanzmessmodul und insbesondere dessen erstes Gehäuse eine erste Bedieneinheit zur Aktivierung von Gerätefunktionen des ersten Distanzmessmodul, wie beispielsweise eine Ein/Aus-Taste sowie eine Messtaste zur Auslösung einer Entfernungsmessung. Die erfindungsgemäße Vorrichtung zur Entfernungsmessung weist darüber hinaus ein zweites Distanzmessmodul mit einem zweiten Gehäuse mit einer zweiten Sendeeinheit für ein zweites Messsignal und einer zweiten Empfangseinheit für das von einem Zielobjekt rücklaufende zweite Messsignal auf. Das zweite Distanzmessmodul verfügt ferner über eine zweite Bedieneinheit zur Aktivierung von Gerätefunktionen des zweiten Distanzmessmoduls. Des Weiteren verfügt die erfindungsgemäße Vorrichtung zur Entfernungsmessung über zumindest eine Auswerteeinheit zur Bestimmung der Entfernung zwischen dem ersten und dem zweiten Zielobjekt.

In der erfindungsgemäßen Vorrichtung zur Entfernungsmessung sind Verbindungsmittel vorgesehen, die das erste Distanzmessmodul und das zweite Distanzmessmodul sowohl mechanisch als auch datentechnisch miteinander koppeln. Insbesondere ist diese mechanische und datentechnische Kopplung derart ausgebildet, dass bei Betätigung eine Funktionstaste der ersten Bedieneinheit auch die entsprechende Funktion des zweiten Distanzmessmoduls ausgelöst wird.

Die datentechnische Kopplung, d.h. die Signal- und Datenübertragung, des ersten Distanzmessmoduls mit dem zweiten Distanzmessmodul ist in vorteilhafter Weise derart ausgebildet, dass in der Kommunikation der Module untereinander ein Gerät, bspw. das erste Distanzmessmodul, zum Mastergerät im folgenden kurz "Master" genannt, und das andere Gerät, bspw. das zweite Distanzmessmodul, zum Slavegerät kurz "Slave" genannt, ausgewählt wird. Wird nun eine Bedientaste der Bedieneinheit des ersten Distanzmessmodul betätigt, so wird über die signaltechnische Kopplung der beiden Distanzmessmodule untereinander, auch die entsprechende Funktion am zweiten Distanzmessmodul ausgelöst. Eine unvorteilhafte Betätigung der Bedientasten beider Distanzmessmodule der Vorrichtung zur Auslösung der gleichen Funktion an beidem Modulen der Vorrichtung ist somit nicht erforderlich.

Durch die in den abhängigen Ansprüchen aufgeführten Merkmale sind vorteilhafte Weiterbildungen der im unabhängigen Anspruch angegebenen Vorrichtung möglich.

So kann vorteilhaft beispielsweise eine Entfernungsmessung mit der erfindungsgemäßen Vorrichtung am Mastergerät ausgelöst werden, wobei beide Distanzmessmodule dann die jeweilige Teildistanz zu einem dem Distanzmessmodul jeweils zugeordneten Zielobjekt bestimmen, so dass über die in der Vorrichtung integrierte Auswerteeinheit die Endsumme der Teilstrecken als die gesuchte Entfernung ermittelt und das gewünschte Ergebnis ausgegeben werden. Eine Aktivierung der Distanzmessung des zweiten Distanzmessmoduls über die Bedieneinheit, d.h. über die Funktionstasten des zweiten Distanzmessmoduls ist somit nicht erforderlich. Bei Auslösung beispielsweise einer Entfernungsmessung mittels des ersten Distanzmessmoduls wird automatisch auch eine Entfernungsmessung des zweiten Distanzmessmoduls ausgelöst, ohne dass eine Funktionstaste des zweiten Distanzmessmoduls betätigt werden muss.

Neben der Aktivierung einer Entfernungsmessung ermöglicht die erfindungsgemäße Vorrichtung beispielsweise auch das Ein- oder Ausschalten beider Bedieneinheiten lediglich am Mastergerät. Somit kann jede Funktion der zweiten Bedieneinheit über die entsprechende Taste der Bedieneinheit des ersten Distanzmessmodul aktiviert bzw. ausgelöst werden.

In vorteilhafter Weise ist das Gehäuse des ersten Distanzmessmoduls über einen Adapter, insbesondere einen mechanischen Adapter, mit dem Gehäuse des zweiten Distanzmessmoduls mechanisch verkoppelbar. Dabei ist die mechanische Verkoppelung der Gehäuse der Distanzmessmodule derart vorgesehen, dass die Referenzebene, ab der die jeweilige Entfernung von einem Distanzmessmodul aus gemessen wird, für beide Geräte, d.h. Module zusammenfällt. In alternativen Ausführungsformen kann vorgesehen sein, dass jedes Distanzmessmodul über eine eigene Referenzebene verfügt, wobei der Abstand der Referenzebenen beim verkoppelten Messvorgang bekannt ist und insbesondere von der Auswerteeinheit abrufbar bzw. dieser über eine entsprechende Schnittstelle automatisch mitgeteilt wird.

Wird in vorteilhafter Weise die gemeinsame Referenzebene der erfindungsgemäßen Vorrichtung als Symmetrieebene des Adapters ausgebildet, so ist es bspw. möglich, die Gehäuse des ersten und des zweiten Distanzmessmoduls derart miteinander zu verkoppeln, dass sie einen Winkel von 180° zueinander einnehmen. Auf diese Weise wird gewährleistet, dass auch das erste Messsignal unter einem Winkel von 180° zum zweiten Messsignal ausgerichtet ist. Die erfindungsgemäße Vorrichtung ermöglicht somit die Entfernungsmessung zwischen zwei Zielobjekten, wobei es für die Ermittlung dieser Entfernung nicht darauf ankommt, wo die erfindungsgemäße Vorrichtung innerhalb dieser Strecke angeordnet ist.

Insbesondere ermöglicht die erfindungsgemäße Vorrichtung die simultane Messung zweier Teilstrecken. Dazu bedarf es lediglich der Betätigung einer entsprechenden Bedieneinheit eines Distanzmessmoduls. Die Distanzmessmodule der erfindungsgemäßen Vorrichtung sind in vorteilhafter Weise datentechnisch derartig miteinander gekoppelt, dass durch die Betätigung eines Gerätes, d.h. eines Moduls auch direkt das zweite, in der Vorrichtung vorhandene Modul aktiviert und auch eine Entfernungsmessung mit diesem zweiten Gerät ausgelöst wird.

Der mechanische Adapter zur Verkopplung der Gehäuse des ersten und des zweiten Distanzmessmoduls miteinander ist in vorteilhafter Weise derart ausgebildet, dass er neben der mechanischen Kopplung der Gehäuse auch zu einer datentechnischen Kopplung zwischen den Geräten führt. Dazu weist der Adapter entsprechende Übertragungsmittel auf, die eine Daten- bzw. Signalübertragung zwischen den Distanzmessmodulen ermöglichen.

Die Übertragungsmittel des Adapters können bspw. auf einem galvanischen, einem optischen, einem induktiven oder auch auf einem magnetischen Effekt beruhen. Durch die Daten- bzw. Signalübertragung aufgrund eines oder mehrerer dieser Effekte wird den Mikroprozessoren beider Distanzmessmodule einerseits die Information zur Verfiigung gestellt, dass die Geräte mechanisch verkoppelt sind und andererseits werden die Geräte derart verschaltet, dass sie optional oder zwingend in den Zustand einer verbundenen Messeinheit versetzt werden. Dies führt, wie oben beschrieben, dazu, dass beim Auslösen eines Messvorgangs am Mastergerät zwei Einzelmessungen, insbesondere in diametraler Richtung, ermittelt und zu einem Summenwert aufaddiert werden. Dieser Summenwert ist gegebenenfalls um den Abstand der Referenzebenen der Einzelgeräte zu korrigieren. Die dazu erforderliche Fernsteuerung des Slave-Gerätes bzw. -Moduls sowie die Datenübertragung vom "Slave-" zum "Mastergerät" kann wie beschrieben bspw. galvanisch über einen als Koppelelement dienenden Adapter oder aber auch unabhängig von einem solchen Koppelelement, bspw. per Funk oder Infrarotschnittstelle erfolgen.

In einer besonders vorteilhaften Ausfühnmgsform der erfindungsgemäßen Vorrichtung dient der Adapter zudem als Aufnahme und Träger für die elektrische Energieversorgung der Entfernungsmessvorrichtung. So kann der Adapter bspw. als Batterie- oder Akkugehäuse ausgebildet sein, der in entsprechende Enden zweier Entfernungsmessgeräte eingeschoben wird.

Insbesondere ermöglicht es die erfindungsgemäße Vorrichtung zur Entfernungsmessung zwei baugleiche Entfernungsmesser über einen solchen Adapter derart miteinander zu verkoppeln, dass die daraus entstehende Vorrichtung zur Entfernungsmessung das Messen in zwei Raumrichtungen ermöglicht.

Eine entsprechende Software zur Ansteuerung der einzelnen Gerätemodule kann bereits in den einzelnen Seriengeräten abgelegt sein. Ein Besitzer mehrer Entfernungsmessgeräte kann somit unter Verwendung des speziell ausgestalteten Adapters zwei normale Entfernungsmessgeräte in vorteilhafter Weise zu der erfindungsgemäßen Vorrichtung kombinieren. Über entsprechende Verbindungsmittel, bspw. im Adapter, werden die Messgeräte nicht nur mechanisch aneinander gekoppelt, sondern es kann, bspw. durch die Belegung entsprechender Kontakte, die in den Messgeräten und im Adapter ausgebildet sind, die erfindungsgemäße Einheit derart verschaltet werden, dass ein Gerät zum Mastergerät definiert wird, welches durch seine Betätigung auch gleichzeitig und insbesondere simultan, das zweite Gerät steuert.

In alternativen Ausführungsformen kann in vorteilhafter Weise vorgesehen sein, dass die Defmition des Master- bzw. Slave- Gerätes erst durch den Nutzer derart erfolgt, dass dasjenige Gerät, dessen Bedieneinheit vom Anwender zuerst betätigt wird, automatisch zum Mastergerät definiert wird und durch eine entsprechende Signalübertragung über die Verbindungsmittel, das zweite nicht direkt bediente Gerät ebenfalls schaltet. In dieser vorteilhaften Ausführungsform der erfindungsgemäßen Vorrichtung kann somit wahlweise sowohl das erste als auch das zweite Distanzmessmodul den Status des "Master-" bzw. des "Slave-Gerätes" annehmen. So kann beispielsweise der Händigkeit eines Anwenders Rechnung getragen werden.

Eine besonders vorteilhafte Ausfühnmgsform der erfindungsgemäßen Vorrichtung wird erreicht, wenn zumindest ein Messsignal für die Entfernungsmessung ein optisches Signal, insbesondere ein Laserstrahl ist. In der erfindungsgemäßen Vorrichtung sind Kombinationen zwischen Distanzmessmodulen möglich, die verschiedene Meßmethoden, bspw. Laserentfernungsmesser und Ultraschallentfernungsmesser oder Laserentfernungsmesser und Maßband verwenden. Die möglichen Bedienfunktionen eines einzelnen Moduls können somit für beide Geräte vom jeweils ausgewählten Mastermodul gesteuert werden.

Eine besonders vorteilhafte Ausführungsform der erfindungsgemäßen Vorrichtung ergibt sich durch die Verwendung zweier optoelektronischer Distanzmessmodule. Auf diese Weise kann durch das Zusammenschalten zweier Seriengeräte ein Laserentfernungsmesser realisiert werden, der einen erweiterten Anwendungsbereich ermöglicht. Insbesondere erhält ein Anwender bspw. durch einfachen Erwerb eines weiteren Standardgerätes die Möglichkeit auf komfortable Weise insbesondere Innenmaße aufzunehmen.

Weitere Vorteile der erfindungsgemäßen Vorrichtung ergeben sich aus den Zeichnungen und der zugehörigen Beschreibung.

Zeichnung

In der Zeichnung sind Ausführungsbeispiel für die erfindungsgemäße Vorrichtungen zur Entfernungsmessung dargestellt, welche in der nachfolgenden Beschreibung näher erläutert werden sollen. Die Figuren der Zeichnung, deren Beschreibung sowie die auf den Gegenstand der Erfmdung gerichteten Ansprüche enthalten zahlreiche Merkmale in Kombination. Ein Fachmann wird diese Merkmale bzw. die darauf gerichteten Ansprüche auch einzeln betrachten und zu weiteren, sinnvollen Kombinationen und Ansprüchen zusammenfassen.

Es zeigen:
- Figur 1: eine Darstellung eines Ausführungsbeispiels für ein Distanzmessmodul der erfindungsgemäßen Vorrichtung in einer perspektivischen Darstellung,
- Figur 2: ein erstes Ausführungsbeispiel einer erfindungsgemäßen Vorrichtung zur Entfernungsmessung in einer vereinfachten, schematischen Darstellung,
- Figur 3: ein zweites Ausführungsbeispiel einer erfindungsgemäßen Vorrichtung.

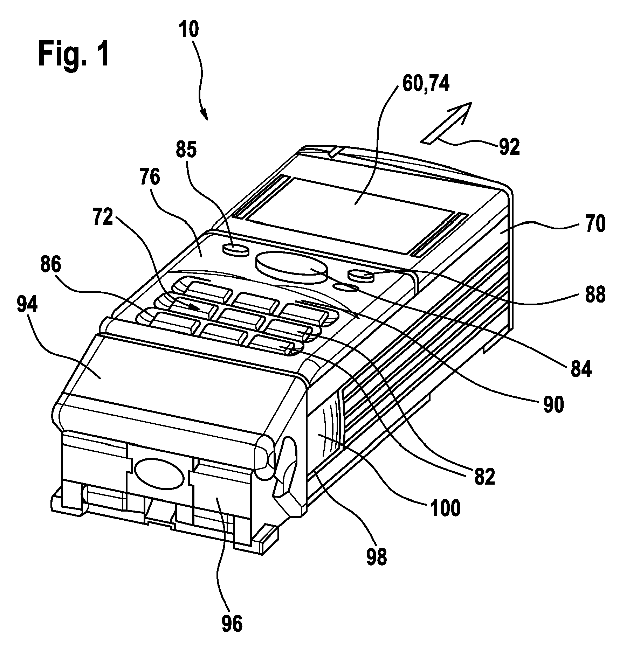

Figur 1 zeigt ein handgehaltenes Laserentfernungsmessgerät 10 als ein mögliches Beispiel für ein Distanzmessmodul der erfindungsgemäßen Vorrichtung zur Entfernungsmessung. Das Entfernungsmessgerät der Figur 4 weist ein Gehäuse 70 auf, in welchem eine erste Bedieneinheit 76, eine Ausgabeeinheit 74 in Form eine graphischen Displays 60 sowie ein Tastenfeld 72 mit Eingabetasten 82 zur Auswahl eines Messmodus, wie bspw. einer Längen-, Flächen- oder Volumenmessung. Die Tasten 82 des Tastenfeldes 72 sind in Vertiefungen 86 des Gehäuses 70 versenkt.

Die erste Bedieneinheit 76 des Laserentfernungsmessgerätes 10, welches in noch zu beschreibenden Weise als ein erstes Distanzmessmodul der erfindungsgemäßen Vorrichtung dient, umfasst des weiteren eine Taste 85 zum An- und Ausschalten des Gerätes, eine Taste 88 zur Beleuchtung der Anzeige 60 sowie eine Messtaste 84 zur Durchführung einer Entfernungsmessung. Die Messtaste 84 ist durch eine stegartige Erhöhung 90 von den Tasten 82 des Tastenfeldes 72 getrennt. Wird die Messtaste 84 betätigt, so wird bei dem Distanzmessmodul gemäß Figur 4 ein modulierter Laserstrahl in Richtung des Pfeils 92 aus dem Gerät ausgesendet, an einem Zielobjekt reflektiert und das rücklaufende Messsignal über eine im Gerät integrierte Empfangsvorrichtung detektiert. Eine Auswerteeinheit des Gerätes ermöglicht es, bspw. über die relative Phasenverschiebung zwischen dem zum Zielobjekt hinlaufenden Messsignal und dem von einem Zielobjekt reflektierten und rücklaufenden Messsignal die Entfernung zwischen dem Messgerät und dem gewünschten Zielobjekt zu ermitteln.

Das Gerät gemäß Figur 1 besitzt an seinem, der Aussenderichtung 92 entgegen gesetzten Ende ein Einschubende 94 auf, welches eine Referenzebene 96 als Nullpunkt für eine Entfernungsmessung definiert. Das Einschubende 94 kann aus dem Laserentfernungsmesser 10 herausgeführt werden und durch anders geartete, ebenfalls in das Gerät einschiebbare Enden, die entsprechende Referenzebenen definieren, ersetzt werden. Dazu weist das Laserentfernungsmessgerät 10 Führungsschienen 98 auf, in die entsprechende Fortsätze 100 des Einschubendes 94 eingreifen und mit diesen verrastet werden. Über entsprechende Schnittstellen, beispielsweise mechanischer oder funktechnischer Art wird der Steuer- und Auswerteeinheit des Moduls mitgeteilt, welches Einschubende gerade in Benutzung ist und welche Referenzebene für eine Abstandsmessung somit zur Anwendung kommt. In vorteilhafter Weise ist das Einschubende 94 als ein Gehäuse zur Aufnahme von Batterien oder Akkumulatoren für das Laserentfernungsmessgerät 10 ausgebildet.

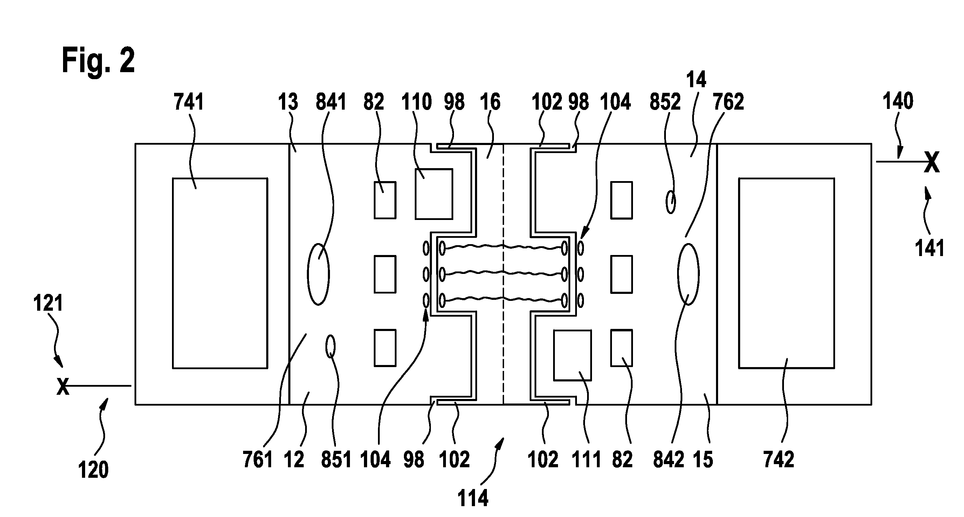

Figur 2 zeigt ein erstes Ausführungsbeispiel einer erfindungsgemäßen Vorrichtung zur Entfernungsmessung in einer stark schematisierten Darstellung. Die erfindungsgemäße Vorrichtung zur Entfernungsmessung gemäß Figur 2 weist zwei Distanzmessmodule 12 bzw. 14 mit zugehörigen Gehäusen 13 und 15 auf, die bspw. jeweils durch einen Laserentfernungsmesser, wie er in Figur 1 dargestellt ist, gebildet sein können.

Zur mechanischen Verkopplung der Gehäuse 13 bzw. 15 der Distanzmessmodule 12 bzw. 14 wird das jeweilige, gerade in Benutzung befindliche Einschubende 94 der Laserentfernungsmesser 10 herausgezogen und durch einen speziell gestalteten Adapter 16 ersetzt. Dieser Adapter 16 weist beidseitig Fortsätze 102 auf, die in die Führungsschienen 98 an den Gehäusen 13 bzw. 15 der Distanzmessmodule 12 bzw. 14 eingreifen. Auf diese Weise ist es möglich, die beiden Distanzmessmodule 12 und 14 mechanisch sicher miteinander zu verkoppeln. Insbesondere ist der Adapter 16 gemäß dem Ausführungsbeispiel der Figur 2 derart gestaltet, dass die beiden Aussenderichtungen 92 der beiden nunmehr gekoppelten Module einen Winkel von 180° zueinander bilden.

Neben der mechanischen Verkopplung dient der Adapter 16 im Ausführungsbeispiel der erfindungsgemäßen Vorrichtung gemäß Figur 2 auch als daten- bzw. signaltechnisches Verbindungsmittel, welches es ermöglicht, den Mikroprozessoren beider Geräte einerseits die Information zur Verfiigung zu stellen, dass die beiden Geräte nunmehr mechanisch miteinander gekoppelt sind und somit zweitens optional oder zwingend in den Zustand einer verbundenen Messeinheit versetzt worden sind. Hierzu können einerseits jeweils in den Distanzmessmodulen 12 und 14 bzw. den zugehörigen Gehäusen 13 bzw. 15 und andererseits im Koppeladapter 16 bspw. galvanische Kontakte 104 vorhanden sein, die es der oder den Auswerteeinheiten der Vorrichtungen ermöglichen, zu erkennen, welche Art von Adapter oder Endstück jeweils eingesetzt ist. Neben den beschrieben elektrischen Kontaktmitteln 104 gemäß Figur 2 sind zur signaltechnischen Verkopplung der Distanzmessmodule bspw. auch optische, induktive oder magnetische Effekte möglich, die die entsprechenden Signale, d.h. Informationen, an die Rechen- und Auswerteeinheiten der Vorrichtung übermitteln. Als Signale können so beispielsweise Messdaten oder Kennungen der Geräte oder der verwendeten Adapter übertragen werden.

Über eine entsprechende Steuerroutine für die erfindungsgemäße Vorrichtung kann bei Vorliegen einer positiven mechanischen und signaltechnischen Verkopplung zweier Distanzmessmodule 12 und 14 mittels eines Adapters 16 die Gesamtvorrichtung derart geschaltet werden, dass beim Auslösen eines Messvorganges an einem Distanzmessmodul auch eine Entfernungsmessung des zweiten Distanzmessmoduls ausgelöst wird. Dies kann bspw. derart erfolgen, dass durch Betätigung einer Messtaste oder einer Einschalttaste das dadurch ausgewählte Distanzmessmodul zum "Master-Gerät" definiert wird und das zweite in der erfindungsgemäßen Vorrichtung vorhandene Distanzmessmodul den Slave-Status bekommt. Betätigt ein Anwender bspw. die Messtaste 841 der Bedieneinheit 761 des Distanzmessmoduls 12, so wird dieses zum Mastergerät der Vorrichtung definiert und löst neben der Messung mit Messstrahl 120 gleichzeitig und simultan auch direkt eine Entfernungsmessung des Distanzmessmoduls 14 mit Messstrahl 140 aus. Die vom Distanzmessmodul 14 in einer Auswerteeinheit 111 ermittelte Distanz zum Zielobjekt 141 wird über die Verbindungsmittel 104 des Adapters 16 der Auswerteeinheit 110 des Distanzmessmoduls 12 übermittelt. Aus dieser Distanz zum Zielobjekt 141 und der vom Distanzmessmodul 12 bestimmten Distanz zum Zielobjekt 121 wird gegebenenfalls unter Addition des bekannten, beim gekoppelten Messvorgang durch den Adapter erzeugten zusätzlichen Abstand, der Abstand zwischen den Zielobjekten 121 und 141 ermittelt. Der so ermittelte Abstand kann wahlweise auf der Anzeige 741 oder auf der Anzeige 742 bzw. auch auf beiden Anzeigen der Vorrichtung dargestellt werden. Ebenso in alternativen Ausführungsformen möglich, auf den beiden Anzeigen jeweils die zugehörige Teildistanzen zum zugehörigen Zielobjekt, sowie die addierte Gesamtdistanz auszugeben.

Alternativerweise ist es auch möglich, die Rohdaten des Distanzmessmoduls 14 (in diesem Fall in der Funktion des "Slave-Gerätes") direkt über die signaltechnischen Verbindungsmittel 104 an die Auswerteeinheit 110 des Distanzmessmoduls 12 (bei dieser Anwendung als Mastergerät) zu übermitteln, welches dann aus diesen Daten und den vom Distanzmessmodul 12 ermittelten Daten die gesuchte Entfernung zwischen den Zielobjekten 121 und 141 ermittelt.

Die erfindungsgemäße Vorrichtung ermöglicht es, zwei Standardgeräte, wie bspw. den Laserentfernungsmesser 10 gemäß Figur 1 als Distanzmessmodule 12 bzw. 14 zu verwenden und diese durch eine mechanische und signaltechnische Verkopplung zu einer einzigen Messvorrichtung zur Entfernungsmessung zusammenzuschalten. Dabei ist die mechanische Kopplung der Geräte bzw. Module in vorteilhafter Weise insbesondere derart, dass die Referenzebene 114, ab der die Entfernung zu einem Zielobjekt gemessen wird, für beide Module zusammenfällt. Der mechanische Kopplungsvorgang kann dabei mit einem signaltechnischen Kopplungsvorgang verbunden sein, der den Mikroprozessoren beider Geräte einerseits die Information zur Verfiigung stellt, dass die beiden Geräte nunmehr mechanische gekoppelt sind und andererseits eine Master-Slave-Zuordnung für die beiden Distanzmessmodule ermöglicht. Dies führt, wie oben beschrieben, dazu, dass beim Auslösen des Messvorganges am als Master definierten Distanzmessmodul zwei Einzelmesswerte in diametraler Richtung ermittelt und zu einem Summenwert addiert werden. Darüber hinaus kann das Slave-Modul beispielsweise auch durch das MasterModul einschaltbar sein. Die dazu erforderliche Fernsteuerung des Slave-Gerätes sowie die Datenübertragung vom Slave-Gerät zum Master bzw. umgekehrt, erfolgt im Ausfiihrungsbeispiel der Figur 2 galvanisch über die Konzakte 104 die ebenfalls in dem als mechanisches Koppelelement dienenden Adapter 16 ausgebildet sind.

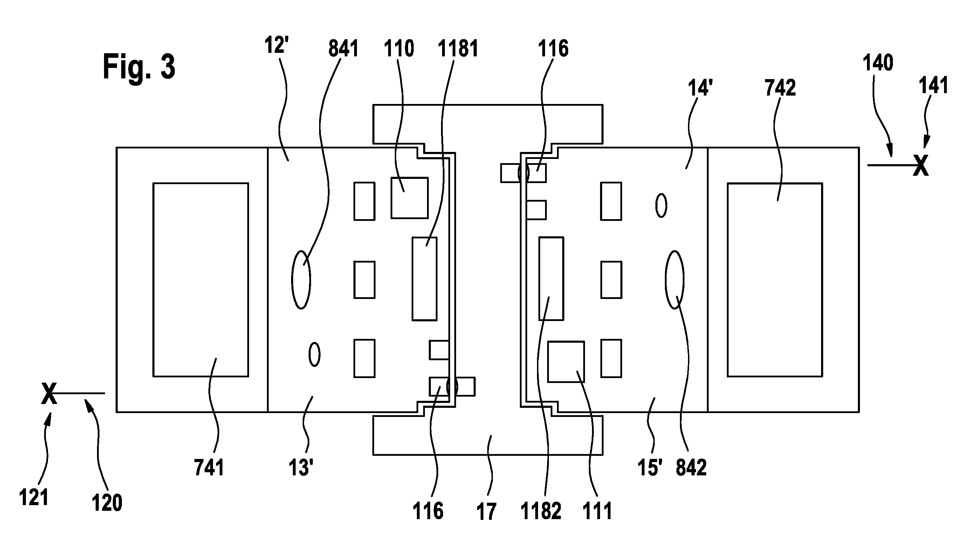

Figur 3 zeigt ein zweites Ausführungsbeispiel für eine erfindungsgemäße Vorrichtung zur Entfernungsmessung unter Verwendung zweier Distanzmessmodule. Bei dem Ausfiihrungsbeispiel gemäß Figur 3 sind die mechanischen bzw. signaltechnischen Verbindungsmittel voneinander getrennt. Mechanisch sind die beiden Distanzmessmodule 12' bzw. 14' bzw. Ihre Gehäuse 13' und 15' über einen Adapter 17 miteinander verkoppelt. Neben dem in Figur 3 gezeigten Adapter 17 bzw. dem in Figur 2 beschriebenen Adapter 16 kann zur mechanischen Verkopplung der Distanzmessmodule der erfindungsgemäßen Vorrichtung bspw. aber auch eine Steck-, Bajonett-, Schraubverbindung oder dergleichen zwischen den Gehäusen 13 bzw13' und 15 bzw 15' verwendet werden.

Über eine entsprechende Kennung 116 können die Distanzmessmodule den eingesetzten Adapter 17 identifizieren und somit einer Auswerteeinheit 110 bzw. 111 des Messgerätes mitteilen, dass nunmehr der Zustand einer verbundenen Messeinheit vorliegt. Diese Übermittlung kann aber auch über weitere Verbindungsmittel, wie beispielsweise Funk-(1181,1182) oder Infrarotschnittstellen erfolgen, so dass in diesem Falle der Adapter lediglich der mechanischen Kopplung dienen würde. Ein solcher Adapter könnte beispielsweise auch eine Aufnahme für ein Stativ aufweisen, auf dem die erfindungsgemäße Vorrichtung befestigt, insbesondere rotierbar befestigt werden könnte.

In dem verkoppelten Zustand der Vorrichtung wird ebenfalls ein Gerät zum Master-Gerät und das zweite Gerät zum Slave-Gerät definiert. Diese Defmition kann durch eine geräteinterne Software, bzw. durch ein Steuerprogramm zugewiesen werden. In vorteilhafter Weise definiert ein Anwender jedoch den Master- bzw. Slave-Zustand der jeweiligen Module durch seine eigenhändige Bedienung. Durch die Auswahl des Anwenders, welches Modul er zuerst einschaltet, bzw. welche Messtaste 841 oder 842 er betätigt, wird das zuerst betätigte Modul zum "Mastergerät" definiert und das nicht aktiv betätigte, zweite Gerät wird in den "Slave-Zustand" versetzt und durch das Matergerät gesteuert.

Die Signal- und Datenübertragung zwischen Slave- und Mastergerät erfolgt im Ausführungsbeispiel der Figur 3 über eine Schnittstelle 1181 bzw. 1182, die bspw. serienmäßig an den Distanzmessmodulen 12' und 14' ausgebildet ist. Eine solche Schnittstelle kann bspw. durch eine Infrarotschnittstelle oder aber auch durch eine Funkschnittstelle gebildet sein. In besonders vorteilhafter Weise ist es möglich, eine Funkschnittstelle nach dem BlueTooth-Standard für die Übertragung von Signalen und Daten zwischen dem Master-Gerät und dem Slave-Gerät zu verwenden. Das Master-Gerät, im Ausführungsbeispiel der Figur 3 sei dies bspw. das Distanzmessmodul 12', überträgt über die Funkschnittstelle, insbesondere eine BlueTooth-Schnittstelle 1181, die Steuerungssignale an das Slave-Gerät 14', welches ebenfalls über eine derartige Schnittstelle 1182 verfügt. Betätigt ein Anwender die Messtaste 841 des Distanzmessmoduls 12', so wird diese Information instantan an das zweite Distanzmessmodul 14' übertragen und durch eine entsprechende Steuerungsroutine der Messvorgang auch des Distanzmessmoduls 14' ausgelöst. Über die Funkschnittstelle 1182 können dann die Rohdaten der Entfernungsmessung des Distanzmessmoduls 14' an die Auswerteeinheit 110, welche im Ausführungsbeispiel der Figur 3 im Distanzmessmodul 12' angeordnet ist, übermittelt werden. Die Auswerteeinheit 110 ermittelt sowohl den Abstand des Distanzmessmoduls 12' zum Zielobjekt 121, als auch den Abstand des Distanzmessmoduls 14' zum Zielobjekt 141. Aus diesen Teilstrecken sowie einem gegebenenfalls vorhandenen Off-Set aufgrund des mechanischen Adapters 17 ermöglicht die erfindungsgemäße Vorrichtung die Bestimmung der Distanz zwischen den Zielobjekten 121 und 141. Dies ist insbesondere in vorteilhafter Weise unabhängig von der Position der erfindungsgemäßen Vorrichtung zwischen den beiden Zielobjekten 121 und 141 möglich.

In alternativen Ausführungsformen kann jedes Distanzmessmodul für sich die jeweilige Strecke des entsprechenden Distanzmessmoduls zum zugeordneten Zielobjekt bestimmen. Das Master-Gerät wird dann die vom Slave-Gerät ermittelte Strecke abfragen und entsprechend zu der vom Mastergerät ermittelten Strecke hinzuaddieren und zur Ausgabe bzw. Anzeige bringen.

Die erfindungsgemäße Vorrichtung ermöglicht es somit einem Anwender, in sehr komfortable Weise insbesondere Innenmaße aufzunehmen. Die erfindungsgemäße Vorrichtung muss nunmehr keinerlei physikalischen Kontakt zu einem Nullpunk der zu vermessenden Strecke haben. Somit wird insbesondere das Messen aus Ecken, Nuten und ähnlich engen Bereichen deutlich vereinfacht. Insbesondere ist die erfindungsgemäße Vorrichtung modular aus baugleichen Serienprodukten realisierbar. Über einen zusätzlichen Adapter und eine entsprechende Adapterkennung können bspw. kommerzielle Laserentfernungsmesser zu einer erfindungemäßen Vorrichtung zur Entfernungsmessung, sowohl mechanisch als auch daten- und signaltechnisch verkoppelt werden. In der Kommunikation der Distanzmessmodule untereinander, die bspw. kontaktiert oder aber auch kabellos erfolgen kann, wird ein Gerät in vorteilhafter Weise zum "Master" und das andere Gerät zum "Slave" ausgewählt und definiert. Wird eine Funktion des Bedienfeldes eines Moduls durch eine zugehörige Taste am Mastergerät ausgeführt, so wird auch die entsprechende Funktion am Slave-Gerät aktiviert. Insbesondere ermöglicht die gemeinsame Steuerung der beiden Distanzmessmodule der erfindungsgemäßen Vorrichtung über lediglich eine Bedieneinheit, bspw. eine Ein-/Austaste oder eine Messtaste eines der Messmodule eine anwenderfreundliche Bedienung. Eine Streckenmessung beider Distanzmessmodule kann durch eine einfache Betätigung am Master ausgelöst werden. Für einen Anwender ergibt sich somit die Möglichkeit durch einen entsprechenden Adapter, der bspw. als Zubehörteil zu kommerziell vertriebenen Laserentfernungsmessern angeboten werden kann, eine Vorrichtung zur Entfernungsmessung zur erhalten, die es in einfacher Weise ermöglicht, einen Messvorgang in zwei diametral entgegengesetzten Richtungen durch die Betätigung lediglich eines Gerätes auszuführen. Die dazu erforderliche Fernsteuerung des Slave-Gerätes, sowie die Daten- bzw. Signalübertragung vom "Slave" zum "Master-Gerät" kann bspw. galvanisch über ein Koppelelement oder aber auch per Funk unabhängig vom Koppelelement stattfinden.

Die erfindungsgemäße Vorrichtung ist nicht auf die in den Zeichnungen aufgeführten Ausführungsbeispiele beschränkt. Die Erfindung ist nicht beschränkt auf die Verwendung von Laserentfernungsmessern als Distanzmessmodule. Insbesondere ist die Erfindung nicht beschränkt auf die Verwendung zweier baugleicher Distanzmessmodule bzw. zweier baugleicher Laserentfernungsmesser.

Die erfindungsgemäße Vorrichtung zur Entfernungsmessung lässt sich ebenfalls durch Distanzmessmodule auf Basis der Ultraschalltechnik realisieren. Es sind auch Kombinationen zwischen Geräten möglich, die verschiedene Messmethoden einsetzen. So ist bspw. auch eine Kombination von Laserentfernungsmessung und Ultraschallmessung prinzipiell denkbar.

## Patentansprüche

1. Vorrichtung zur Entfernungsmessung, insbesondere eine handgehaltene Vorrichtung, mit einem ersten Distanzmessmodul (12,12'), welches ein erstes Gehäuse (13,13') mit einer ersten Sendeeinheit für ein erstes Messsignal (120) und eine erste Empfangseinheit für das von einem ersten Zielobjekt (121) zurücklaufende erste Messsignal und eine erste Bedieneinheit (761) zur Aktivierung von Gerätefunktionen des ersten Distanzmessmodul (12,12') aufweist, sowie mit einem zweiten Distanzmessmodul (14,14'), welches ein zweites Gehäuse (15,15') mit einer zweiten Sendeeinheit für ein zweites Messsignal (140) und eine zweite Empfangseinheit für das von einem zweiten Zielobjekt (141) zurücklaufende zweite Messsignal und eine zweite Bedieneinheit (762) zur Aktivierung von Gerätefunktionen des zweiten Distanzmessmodul (14,14') aufweist, sowie mit zumindest einer Auswerteeinheit (110,111) zur Bestimmung der Entfernung zwischen dem ersten Zielobjekt (121) und dem zweiten Zielobjekt (141), **dadurch gekennzeichnet, dass** das erste Distanzmessmodul (12,12') und das zweite Distanzmessmodul (14,14') über Verbindungsmittel (16,17,104,116,118) derart mechanisch und signaltechnisch miteinander koppelbar sind, dass bei Betätigung einer Funktionstaste (841,851) der ersten Bedieneinheit (761) auch die entsprechende Funktion (842,852) des zweiten Distanzmessmoduls (14,14') ausgelöst wird.

2. Vorrichtung nach Anspruch 1, **dadurch gekennzeichnet, dass** die Verbindungsmittel derart ausgebildet sind, dass bei Betätigung einer Messtaste (841) der ersten Bedieneinheit (761) zur Auslösung einer Entfernungsmessung durch die erste Bedieneinheit auch eine Entfernungsmessung des zweiten Distanzmessmoduls (14,14') ausgelöst wird.

3. Vorrichtung nach Anspruch 1, **dadurch gekennzeichnet, dass** das Gehäuse (13) des ersten Distanzmessmoduls (12,12') über einem Adapter (16,17) mit dem Gehäuse (15) des zweiten Distanzmessmoduls (14,14') mechanisch koppelbar ist.

4. Vorrichtung nach Anspruch 2, **dadurch gekennzeichnet, dass** der Adapter (16,17) derart ausgestaltet ist, dass eine erste Referenzebene (114), ab der die Entfernung des ersten Distanzmessmodul (12,12') zum ersten Zielobjekt (121) bestimmt wird, mit einer zweiten Referenzebene (114), ab der die Entfernung des zweiten Distanzmessmodul (14,14') zum zweiten Zielobjekt (141) bestimmt wird, zusammenfällt.

5. Vorrichtung nach Anspruch 3, **dadurch gekennzeichnet, dass** die gemeinsame Referenzebene (114) vom erstem und zweitem Distanzmessmodul (12,12';14,14') eine Symmetrieebene des Adapters (16,17) bildet.

6. Vorrichtung nach Anspruch 2, **dadurch gekennzeichnet, dass** der Adapter (16,17) Übertragungsmittel (104,116) aufweist, die eine Signalübertragung zwischen den Distanzmessmodulen (12,12';14,14') ermöglichen.

7. Vorrichtung nach Anspruch 5, **dadurch gekennzeichnet, dass** die Übertragungsmittel (104,116) des Adapters (16,17) auf einem galvanischen, optischen, induktiven oder magnetischen Effekt beruhen.

8. Vorrichtung nach Anspruch 1, **dadurch gekennzeichnet, dass** das erste Distanzmessmoduls (12,12') und das zweite Distanzmessmoduls (14,14') jeweils über zumindest eine Schnittstelle (1181,1182), insbesondere eine Funkschnittstelle verfügen.

9. Vorrichtung nach Anspruch 7, **dadurch gekennzeichnet, dass** die Signalübertragung zwischen den Distanzmessmodulen (12,12';14,14') per Funk erfolgt.

10. Vorrichtung nach Anspruch 1, **dadurch gekennzeichnet, dass** das erste Distanzmessmoduls (12,12') und das zweite Distanzmessmoduls (14,14') jeweils über zumindest eine Infrarotschnittstelle verfügen.

11. Vorrichtung nach Anspruch 2, **dadurch gekennzeichnet, dass** der Adapter (16,17) als Aufnahme einer elektrischen Energieversorgung der Vorrichtung ausgebildet ist.

12. Vorrichtung nach einem der vorhergehenden Ansprüche, **dadurch gekennzeichnet, dass** zumindest ein Messsignal zur Entfernungsmessung ein optisches Signal, insbesondere ein Laserstrahl (120,140) ist.

13. Vorrichtung nach einem der vorhergehenden Ansprüche, **dadurch gekennzeichnet, dass** das erste Distanzmessmodul (12,12') und das zweite Distanzmessmodul (14,14') baugleich sind.

14. Vorrichtung nach einem der vorhergehenden Ansprüche, **dadurch gekennzeichnet, dass** das erste Distanzmessmodul (12,12') und das zweite Distanzmessmodul (14,14') über die Verbindungsmittel (16,17,104,116,118) derart mechanisch und datentechnisch miteinander koppelbar sind, dass bei Betätigung der zweiten Bedieneinheit (842) auch eine Entfernungsmessung des ersten Distanzmessmoduls (12,12') ausgelöst wird.

15. Adapter (16,17) für eine Vorrichtung nach zumindest einem der Ansprüche 2 bis 11
